# EUROPEAN PATENT APPLICATION

(11) **EP 1 801 367 A1**
(43) Date of publication of application: **27.06.2007**
(21) Application number: 05258030.5
(22) Date of filing: 23.12.2005
(51) Int. Cl.: F01L 1/344, F16D 3/10

(54) **Variable cam phaser apparatus**

(71) Applicant: Delphi Technologies, Inc., Troy, MI 48007 (US)
(72) Inventor: Baur, Peter, Trier 54295 (DE)
(74) Representative: Waller, Stephen

(57) **Abstract**

A variable cam phaser comprising coaxial drive and driven members drivingly connected by a coupling means, said coupling means enabling said drive and driven members to be relatively angularly adjusted while maintaining driving engagement therebetween, and at least one rotary actuator whereby operation of said actuator causes relative angular displacement between the drive and driven members, the rotary actuator having a rotational axis coaxial with the rotational axis of the drive and driven members.

## Description

The present invention relates to a cam phaser apparatus, particularly, but not exclusively a variable cam phaser apparatus used in valve trains of automobile engines.

It is desirable to be able to adjust the cam phase (i.e. the timing of the opening and closing of the valves) of engines during engine operation in order to improve engine performance, emissions and/or fuel consumption. Various types of arrangements exist that are capable of achieving this adjustment. Such system are required to efficiently convert rotational movement from the drive shaft into rotational movement of the camshaft whilst allowing dislocation between these rotational movements in order to allow variation of the cam phase. Current systems typically utilise hydraulic actuators using high pressure oil to enable relative angular displacement between drive and driven members (e.g. cam sprocket and camshaft) of the valve train.

Such systems have difficulty operating at extremes of temperature, in particular during engine start up when the oil is cold, due to temperature related viscosity changes of the oil.

Whilst attempts have been made to design electrically actuated variable cam phase arrangement, such usually require a complex arrangement of planetary gears or clutch arrangements which have the disadvantage of producing large frictional losses in the conversion process. The complex arrangement of such systems can also introduce controllability and reliability problems.

According to the present invention there is provided a variable cam phaser comprising coaxial drive and driven members drivingly connected by a coupling means, said coupling means enabling said drive and driven members to be relatively angularly adjusted while maintaining driving engagement therebetween, and at least one rotary actuator whereby operation of said actuator causes relative angular displacement between the drive and driven members, the rotary actuator having a rotational axis coaxial with the rotational axis of the drive and driven members.

Preferably the coupling means comprises a first worm gear provided coaxially on the driven member and a first worm mounted on the drive member, said first worm being arranged tangentially to the first worm gear whereby rotation of the first worm causes rotary displacement of the driven member with respect to the drive member, further gear means being provided for transmitting torque between the rotary actuator and said first worm whereby the first worm gear is selectively rotatable by means of the rotary actuator.

Preferably the further gear means comprises a first gear mounted on a rotatably driven member of the rotary actuator, a second gear drivingly engaged with said first gear, said second gear being connected to and constrained to rotate with a second worm, said second worm extending parallel to and radially spaced from said drive and driven members, said second worm drivingly engaging a second worm gear, said second worm gear being connected to and constrained to rotate with said first worm.

Preferably said first worm and second worm gear are fixed on a common shaft, said shaft being rotatably mounted on the drive member.

In a preferred embodiment, the actuator comprises an electric motor having a stator and a rotor. Preferably the stator is fixedly mounted on a non-rotatable part of the engine, for example the cylinder head of the engine, the rotor being rotatably mounted on the stator whereby the rotor can rotate with the drive member, the first gear of the further gear means being provided on an outer peripheral surface of the rotor. The driven member may pass through a central bore in the stator. Bearings may be provided between the driven member and the stator to support the stator whilst permitting relative rotation between the driven member and the stator.

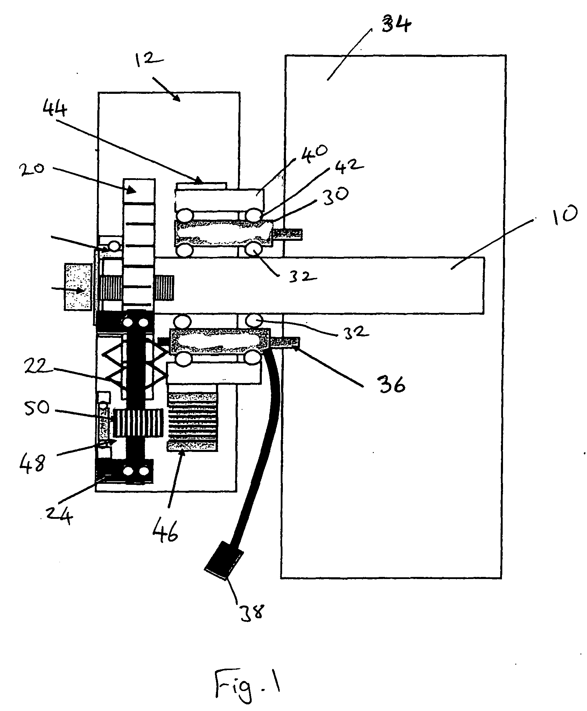

An embodiment of the apparatus according to the present invention will now be described, with reference to the accompanying drawings, in which:-
Fig.1A is a schematic side view of a cam phaser apparatus according to the present invention; and
Fig 2 is an end view of a cam phaser apparatus according to Fig. 1.

As shown in the drawings, a camshaft 10 is typically driven by a cam sprocket 12 which is in turn rotatably driven by the crankshaft of the engine via a toothed drive belt or chain (not shown).

A coupling means provides a connection between the camshaft 10 and sprocket 12 and enables the camshaft 10 and sprocket 12 to be relatively angularly adjusted while maintaining driving engagement therebetween, as will be described below. The coupling means is adjustable by means of a rotary actuator in the form of an electric motor.

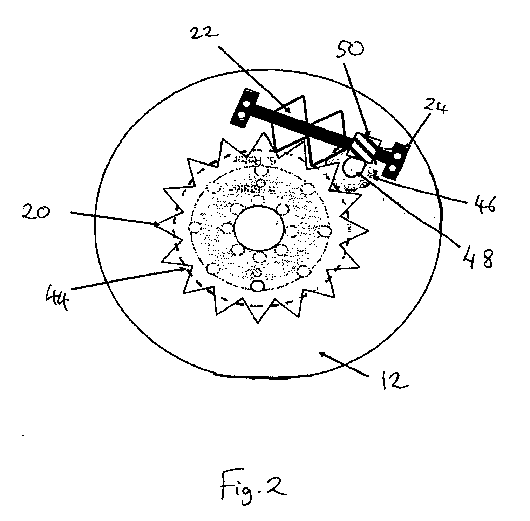

As best shown in Fig. 2, the coupling means comprises a worm gear 20 mounted on the camshaft 10 and a worm mounted on a shaft, the shaft being rotatably mounted on the sprocket 12 fro rotation on an axis tangential to the camshaft worm gear 20, the camshaft worm gear 20 being meshed with the worm 22.

The worm 22 can easily turn the camshaft worm gear 20 to rotate the sprocket 12 relative to the camshaft 10, but the camshaft worm gear 20 cannot turn the worm 22 due to the shallow tooth angle of the gear teeth on the worm 22. Thus the worm 22 and camshaft worm gear 20 effectively lock the sprocket 12 and camshaft 10 together at a fixed angular relationship unless worm 22 is rotated to adjust such angular relationship. Thus the coupling means maintains the angular relationship between the camshaft 10 and sprocket 12 without requiring any power from the rotary actuator. When it is desired to adjust the cam phasing of the valve train, the worm 22 can be rotated by the rotary actuator to adjust the angular relationship between the camshaft 10 and the sprocket 12 as will be described below.

The rotary actuating means comprises an electric motor having a rotary axis coaxial with the axis of rotation of the camshaft 10 and sprocket 12. The stator 30 of the motor is mounted on the camshaft via bearings 32. The stator 30 is held stationary with respect to the cylinder head 34 of the engine by means of fixation pins 36 inserted into receiving apertures in the cylinder head 34. A cable 38 can supply electrical power to the motor.

The rotor 40 of the electric motor is coaxially mounted on the stator via bearings 42. A rotor output gear 44 is provided on the outer peripheral surface of the rotor 40.

The output gear 44 of the rotor 40 engages and is meshed with an intermediate gear 46 mounted on the sprocket 12 and drivingly engaged with an intermediate worm 48 rotatably mounted on the sprocket 12 for rotation about an axis parallel to and radially spaced from the rotational axis of the camshaft. The intermediate worm 48 is drivingly meshed with a further gear 50, said further gear 50 and camshaft worm gear 22 being mounted on a common shaft 24 whereby the camshaft worm gear 22 is constrained to rotate with the further gear 50.

In use, during normal engine operation, the rotor 40 of the actuating motor rotates at the same speed as the camshaft 10 and sprocket 12, the engagement of the worm 22 and camshaft gear 20 maintaining the angular relationship between the camshaft 10 and the sprocket 12.

When it is desired to vary the cam phasing of the valve train, the motor is energised whereby a torque is applied to the rotor in the desired direction. Such torque is transferred to the intermediate gear 46 via the rotor output gear 44, causing the intermediate gear 46 and the associated intermediate worm 48 to rotate in the desired direction. Rotation of the intermediate worm 48 causes rotation of the further gear 50 and rotation of the shaft 24 and the associated camshaft worm gear 22 leading to rotation of the can sprocket with respect to the camshaft.

The system described allows the phase of the camshaft to be reliably altered whilst the engine is running. In this regard, it should be noted that the cam phase may be advanced or retarded depending upon the direction in which the intermediate gear 46 is rotated. Such adjustment may be controlled by the engine management system of typical automobiles. The system therefore effectively allows the rotational position of the camshaft 10 to be varied relative to the rotational position of the sprocket 12.

Importantly, once the cam phase has been adjusted into the advanced / retarded position it will remain in that position until it is positively re-adjusted by the engine management system. Power is only required during cam phase variation. The cam phasing arrangement of the present invention is temperature independent and oil pressure independent, providing more reliable operation than prior art oil pressure actuated arrangements.

Furthermore, because the rotational axis of the rotor 40 is aligned with the rotational axis of the camshaft 10, the motor is not exposed to high centrifugal forces which would occur if the motor was not coaxial with the camshaft.

Modifications and improvements may be made to the foregoing, without departing from the scope of the present invention, for example:-

Whilst the camshaft worm gear has been shown as a complete circle, the gear need only extend around a segment of the circle, for example 60° to 90° to provide a phase adjustment range of around 100 crank degrees.

Although the present invention has been described in relation to automobile engines, it could be used in similar engines used in other applications.

## Claims

1. A variable cam phaser comprising coaxial drive and driven members drivingly connected by a coupling means, said coupling means enabling said drive and driven members to be relatively angularly adjusted while maintaining driving engagement therebetween, and at least one rotary actuator whereby operation of said actuator causes relative angular displacement between the drive and driven members, the rotary actuator having a rotational axis coaxial with the rotational axis of the drive and driven members.

2. A variable cam phaser as claimed in claim 1, wherein the coupling means comprises a first worm gear provided coaxially on the driven member and a first worm mounted on the drive member, said first worm being arranged tangentially to the first worm gear whereby rotation of the first worm causes rotary displacement of the driven member with respect to the drive member, further gear means being provided for transmitting torque between the rotary actuator and said first worm whereby the first worm gear is selectively rotatable by means of the rotary actuator.

3. A variable cam phaser as claimed in claim 2, wherein the further gear means comprises a first gear mounted on a rotatably driven member of the rotary actuator, a second gear drivingly engaged with said first gear, said second gear being connected to and constrained to rotate with a second worm, said second worm extending parallel to and radially spaced from said drive and driven members, said second worm drivingly engaging a second worm gear, said second worm gear being connected to and constrained to rotate with said first worm.

4. A variable cam phaser as claimed in claim 3, wherein said first worm and second worm gear are fixed on a common shaft, said shaft being rotatably mounted on the drive member.

5. A variable cam phaser as claimed in any preceding claim, wherein said actuator comprises an electric motor having a stator and a rotor.

6. A variable cam phaser as claimed in claim 5 when dependent on claim 3 or claim 4, wherein the stator is fixedly mounted on a non-rotatable part of the engine, for example the cylinder head of the engine, the rotor being rotatably mounted on the stator whereby the rotor can rotate with the drive member, the first gear of the further gear means being provided on an outer peripheral surface of the rotor.

7. A variable cam phaser as claimed in claim 5 or claim 6, wherein the driven member passes through a central bore in the stator.

8. A variable cam phaser as claimed in claim 7, wherein bearings are provided between the driven member and the stator to support the stator whilst permitting relative rotation between the driven member and the stator.
